Europäisches Patentamt

European Patent Office

Office européen des brevets

(11) Publication number: **0 122 496**
A2

## (12) EUROPEAN PATENT APPLICATION

(21) Application number: **84103044.8**

(22) Date of filing: **20.03.84**

(51) Int. Cl.³: **B 01 D 46/42**
**B 01 D 46/02**

(30) Priority: **21.03.83 US 477474**

(43) Date of publication of application:
**24.10.84 Bulletin 84/43**

(84) Designated Contracting States:
**AT BE CH DE FR GB IT LI LU NL SE**

(71) Applicant: **PHILLIPS PETROLEUM COMPANY**
**5th and Keeler**
**Bartlesville Oklahoma 74004(US)**

(72) Inventor: **Eatwell, Charles Stanley**
**4 Brebner Road**
**Parsons Hill Port Elizabeth 6000(ZA)**

(74) Representative: **Dost, Wolfgang, Dr.rer.nat.,**
**Dipl.-Chem. et al,**
**Patent- und Rechtsanwälte**
**Bardehle-Pagenberg-Dost-Altenburg & Partner Postfach**
**86 06 20**
**D-8000 München 86(DE)**

(54) **Filtration distribution.**

(57) A filtering apparatus and process using an elongated common hopper with a row of filter compartments are disclosed, in which an elongated roof-shaped guide means guides the fluid to be filtered longitudinally, laterally and downwardly in the hopper causing a more even spreading of the introduced fluid, a reduced load on the filter but essentially no measurable back pressure. The preferred guide element is an inverted tapering V-shaped trough-like structure.

FIG. 3

1

## FILTRATION DISTRIBUTION

This invention relates to the filtration of fluid streams and in particular the filtration of gas streams containing entrained liquid or solid particles. More specifically, the invention relates to the filtration of carbon black containing smoke. In one of its aspects, the invention relates to improving of the filtration efficiency in large, multi-compartment filtration operations.

### Background of the Invention

The art of filtering fluids, and in particular aerosols, is a developed and mature technology in many areas. One problem frequently encountered is that filters become clogged with the entrained material or particles, or that the entrained material builds up a "filter-cake" which more and more reduces the filter efficiency. It is known to remove entrained material from such filters and to put the so "cleaned" filters back into operation. Backflowing and shaking of the filters are known methods to clean filters.

In large scale filter operations, such as carbon plants, in which a large number of filters are utilized several technological problems arise. Thus a relatively even distribution of the fluid to be filtered among the different filters when operated in parallel is desirable. Furthermore, there is a continued need for improving the filtration efficiency, particularly by reducing the filter load. Advantageously these tasks should be accomplished using inexpensive but effective equipment.

## The Invention

It is thus one object of this invention to provide a new filtration apparatus.

Another object of this invention is to provide a filtration system having increased filtration efficiency by a increased filtration rate and having a more even distribution of fluid to be filtered among the filters than was heretofore the case with known apparatus.

A yet further object of this invention is to provide a carbon black filter system having good filtration efficiency, even filtration load distribution among the plurality of filters and having reduced carbon black reentrainment on a cleaning cycle.

These and other objects, details, features, advantages and embodiments of this invention will become apparent to those skilled in the art from the following detailed description of the invention, the appended claims and the drawing in which

FIG. 1 is a schematic view of the filtration system of this invention,

FIG. 2 is a top view of the guide element in the common hopper,

FIG. 3 is a schematic side view of the apparatus as shown by line 33 in FIG. 1,

FIG. 4 is a schematic cross sectional illustration of the guide element to illustrate the angles involved,

FIG. 5 is a side view of the actually employed guide element, and

FIG. 6 is a simplified isometric view of the arrangement of the guide element within the filtration system of this invention.

In accordance with this invention a filtration system is provided for which has an elongated roof-shaped guide above the injected fluid stream entering a common hopper and below a series of separate filter compartments. The elongated roof-shaped guide means has the dual function of causing a more even distribution among the filter compartments of the fluid to be filtered than was possible without this guide means and to guide the fluid to be filtered at least to some extent away from the filters so that the fluid has to reverse its flow before it reaches the filter. The flow reversal and the more even flow distribution cause improved filtration efficiency, increased filter life, and reduced filter load.

More specifically, and in accordance with the first embodiment, a filtration apparatus is provided for in accordance with this invention. This filtration apparatus comprises a plurality of filtration compartments arranged in an essentially straight row defining a longitudinally direction. Below these compartments a common hopper is arranged. The hopper is in fluid communication with each compartment via at least one filter. Inlet means are provided for introducing a fluid to be filtered into this common hopper at or near one end thereof and in a given main direction of injection, which direction is preferably at an angle of not more than 25° with respect to the longitudinal direction. Elongated guide means are arranged in accordance with this invention inside of the hopper. These guide means are substantially roof-shaped and cover from above the fluid when introduced into the hopper at the inlet end of and below the roof-shaped guide means. The elongated guide means are essentially completely open at the bottom covering the fluid stream introduced but permitting the flow of the fluid around the sides of the elongated roof-shaped guide and through the filters into the compartments.

The following features individually or combined constitute further preferred embodiments and variations of this invention:

a) The guide means are substantially narrower than the inside width of the common hopper. This allows passage of fluid easily around the guide means and prevents high vertically upwardly directed speeds of the fluid.

b) The guide means has a ridge which is preferably substantially parallel to the longitudinal direction of the hopper or the compartments and usually essentially horizontally arranged. Recovered particles falling down from the compartments is guided by such a ridge downwardly and into the hopper bottom.

c) The guide means have a convex upwardly facing outward surface and preferably a concave downwardly facing inner surface. The convex upwardly facing surface most preferably is steeper in essentially all the areas than the angle of repose of the material to be filtered

4    0122496

from the fluid. Thereby substantially all of the material will slide off from the convex upwardly facing outer surface and essentially no material or particles will build up on top of the guide means.

d) The concave downwardly facing inner surface of the guide means in cross section perpendicular to the longitudinal direction can have various shapes and in particular that of an inverted V, a circuate shape, and in particular the shape of a circle segment or a semicircle, or the shape of a rectangle with the bottom line removed (inverted rectangular trough). The presently preferred shape of the elongated guide means is that of an inverted V-shaped trough. The angle of the V is preferably in the range of 20 to 30°.

e) The most preferred guide means is built from two inclined elongated plane plates forming an inverted V-shaped trough. The individual plates preferably are built out of a plurality of plate section connected to each other, e.g. by welding.

f) The guide means most preferably have a downwardly facing surface which in longitudinal direction from the fluid inlet side of the guide means becomes less and less enclosing for the fluid stream. Thus, along the guide means from the inlet end there is less and less guidance (decreasing guidance) for the fluid in longitudinal direction and correspondingly more and more flow (increasing freedom to flow) laterally for the fluid. In the preferred case of an inverted V-shaped trough the guide means are characterized by the fact that the slant heights of the trough sides measured on the sides perpendicular to the trough ridge diminish from the inlet end of the guide means along its longitudinal extension. Specifically and preferably the inverted V trough tapers into an apex with a slant height of essentially zero. The slant height decreases preferably in such a way along the longitudinal axis that the slant heights are larger than the values defined by an essentially linear height decrease along the longitudinal direction.

g) The main direction of injection of the fluid is preferably in a vertical plane parallel to or containing the longitudinal axis or respectively the ridge, and this main direction forms an angle of 0 to --- 25° with the longitudinal axis or respectively the ridge or the horizontal. Most preferably the main direction of injection is upwardly under an angle of about 8 to 20° with respect to the longitudinal axis or the ridge or a horizontal line coplanar with said main direction of injection.

h) At the inlet end, the guide means is preferably closed by an inlet wall, which can be an end wall portion of the common hopper. This inlet wall has an opening connecting a fluid conduit with the area below the guide means.

i) The elongated guide means has an inlet end and a downstream end; the downstream end is situated preferably at a distance from the dividing wall between the last compartment and the next-to-last compartment and under the last compartment, which distance is up to 1/3 of the longitudinal extension of the last compartment.

The preferred filtration system of this invention is one specifically designed for recovery of carbon black from carbon black containing smoke. The invention is, however, broadly applicable to filtration systems useful on fluids containing solid particles or liquid droplets or both, and in particular aerosols.

The filtration system of this invention that is particularly advantageously useful for carbon black recovery from carbon black smoke is provided with a large number of elongated filter bags extending vertically into the individual compartments. Each compartment is provided with a backflow gas inlet and a filter off-gas outlet. Valve systems and operatively connected timers are used to connect the compartments periodically to a source of backflow gas or respectively to the filter off-gas conduit. At the bottom of the common hopper it is preferred to have an auger which allows continuous or discontinuous transportation of the accumulated carbon black from the bottom of the hopper to further processing such as pelletizing.

Among the various carbon blacks for which process and apparatus of this invention can be used, the "soft blacks" are preferred. More specifically the blacks having the ASTM designation of the N500, N600 and N700 series are particularly suitable and thus preferred in connection with this invention.

A further embodiment of this invention resides in a filtering process in which a fluid comprising medium and entrained material is filtered. This fluid, in accordance with this embodiment, is introduced into an elongated hopper essentially in longitudinal direction. The fluid is guided by an elongated guide means which is arranged inside of the hopper above the location of fluid entry into the hopper. The injection of the fluid is substantially in longitudinal direction and the guide means is entirely open toward the bottom and has an at least partly concave surface facing the injected fluid stream. The fluid injected into the hopper below this guide means flows longitudinally, then laterally and downwardly and then upwardly within said hopper and upwardly past the guide means. The upwardly flowing fluid is passed from the hopper through filters into a plurality of compartments arranged in a row above the hopper. Thereby entrained material is separated from carrying medium. Periodically a cleaning fluid is passed in opposite direction to the fluid flow through the filter or filters of a compartment. Thereby the entrained material is removed from the filter or filters. The so-removed material is dropped by gravity into the hopper. Finally, the material is removed from the bottom of the hopper, e.g. by an auger toward further processing such as pelleting.

Details and preferred variations described above with respect to the apparatus embodiment of this invention are equally applicable to the process embodiment of this invention.

The process of this invention involves a lateral spreading of the fluid flow within the hopper as well as a reversal of downward into upward flow of the fluid.

A significant feature and preferred embodiment of this invention resides in an operation where the guide means comprise two elongated substantially plane plates defining the lateral extension of said guide means. The longitudinal component of the direction of injection of the fluid stream in accordance with this preferred embodiment is parallel to both of these plates. Thus these plates and preferably the entire guide element does not inhibit the longitudinal flow component of the gas in any manner. This is in contrast to a deflector plate. In this preferred embodiment in accordance with this invention, the guide element only causes flow deflection of those flow components of the gas which are either lateral or upward but leaves the longitudinal flow component unchanged.

In the following description of the drawings and the specific operating system further details and preferred embodiments of this invention are disclosed but the disclosure is not intended to unduly limit the scope of this invention.

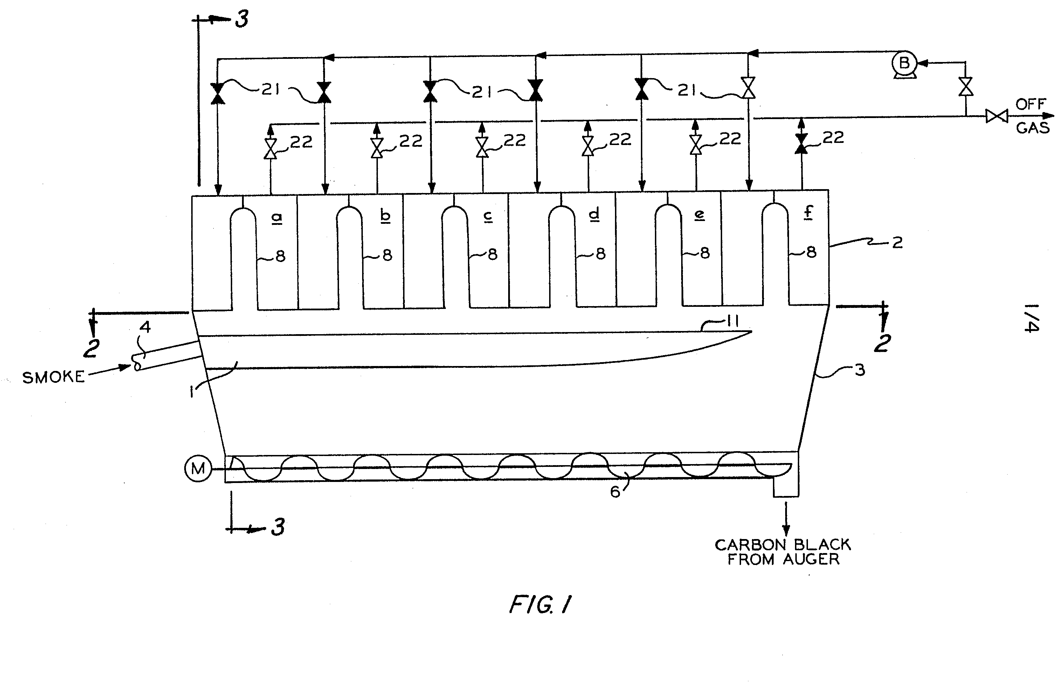

In FIGURES 1, 2 and 3 the filter system of this invention is schematically shown and will be described in the following in connection with the filtration of carbon black containing smoke. An important element of this invention is the roof-shaped guide element 1 which is arranged below a series of filter compartments 2 and within a common hopper 3. Carbon black containing smoke is introduced through pipe 4 which is connected to an upstream end plate 5 and the smoke flows through the pipe 4 and below the roof-shaped guide element 1. The guide element 1 causes the smoke to be evenly distributed beneath and among the filter compartments 2. The smoke after reversions in flow direction passes through bag filters 8 and leaves the filter compartments via an off-gas pipe controlled by valves 22. As shown in FIGURE 1, the filter compartments labelled a, b, c, d and e are in the production mode, i.e. the valves 22 are opened and the corresponding filter bags are collecting black. The filter compartment f in FIGURE 1 is shown to be in the backflush mode. Valve 22 is closed while valve 21 of this compartment f is opened thereby permitting the backflow fluid to be passed through the filter bag into the common hopper which causes the carbon black that had previously been collected on the filter bag to fall into the hopper and into the auger 6. For the compartments a-e the backflush valves 21 are closed.

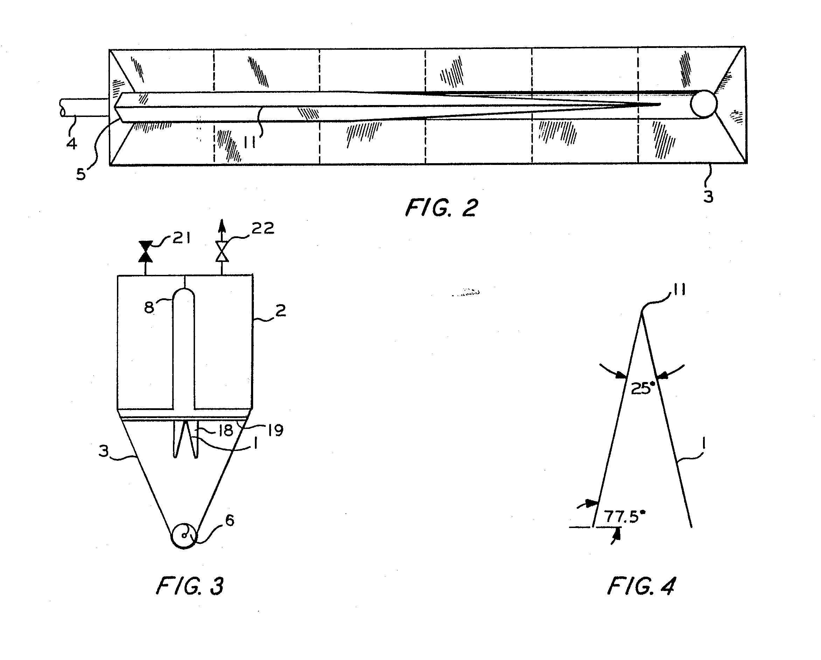

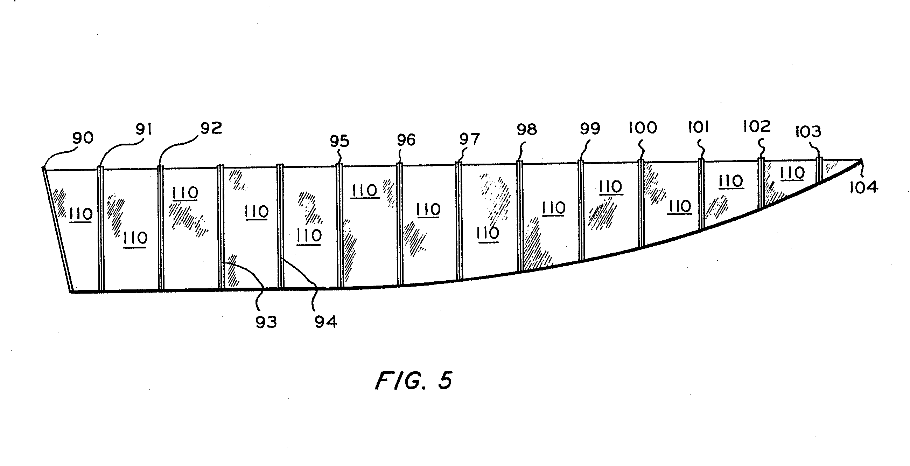

The guide element 1 is attached to support rods 19 (see FIGURE 3) which in turn are attached to the housing walls of the hopper 3. Essentially triangular shaped support plates 18 (see FIGURE 3) improve the connection between the guide element 1 and the support rods 19. As can be seen in FIGURE 5, the guide element 1 is composed of a plurality of plate sectors 110.

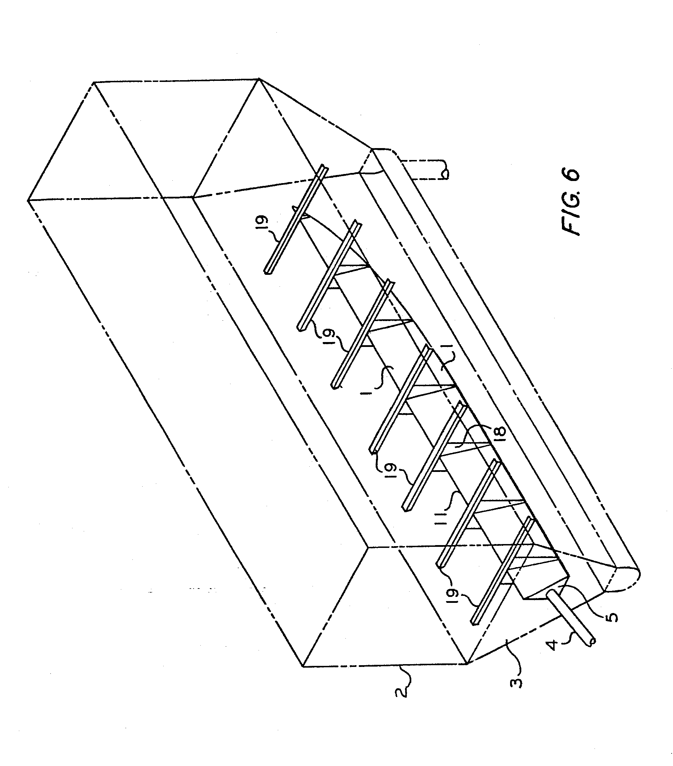

As shown in FIGURE 1, 2, 5 and 6 the bottom portion of guide element 1 tapers from the smoke inlet end (plate 5) into an apex located within the first third of the last compartment. This tapering is preferred in accordance with this invention and causes a more even smoke flow distribution among the different compartments. As is shown in more detail in FIGURE 5, the tapering is not linear but rather the slant heights and also the vertical heights of the points along the edge (these heights being measured under 90° with respect to the ridge 11 of the guide element 1) are larger than the heights one would obtain by a linear tapering. The specific values of the vertical heights of this non-linearly tapering roof-shaped guide element are shown in the following table. The left-hand column relates to the points 90-104 shown in FIGURE 5.

## Table

| | Distance Along Ridge From Inlet | | Vertical Height | |
|---|---|---|---|---|
| Locus | mm | inches | mm | inches |
| 90 (inlet end) | 0 | 0 | 2000 | 78.7 |
| 91 | 940 | 37 | 2000 | 78.7 |
| 92 | 1880 | 74 | 2000 | 78.7 |
| 93 | 2820 | 111 | 2000 | 78.7 |
| 94 | 3760 | 148 | 2000 | 78.7 |
| 95 | 4700 | 185 | 1960 | 77.2 |
| 96 | 5640 | 222 | 1920 | 75.6 |
| 97 | 6580 | 259 | 1870 | 73.6 |
| 98 | 7520 | 296.1 | 1780 | 70.1 |
| 99 | 8460 | 333.1 | 1640 | 64.6 |
| 100 | 9400 | 370.1 | 1480 | 58.3 |
| 101 | 10340 | 407.1 | 1200 | 47.2 |
| 102 | 11280 | 444.1 | 820 | 32.3 |
| 103 | 12220 | 481.1 | 360 | 14.2 |
| 104 (outlet end) | 12900 | 507.9 | 0 | 0 |

FIGURE 4 shows an angle of about 77.5° between the horizontal plane and the sides of the roof-shaped guide element. This angle is larger than the angle of repose of carbon black and is large enough so that essentially no accumulation of carbon black on top of the guide element 1 is encountered.

A typical commercial operational system in accordance with this invention is described in the following by presenting the main dimensions and conditions in tabular form.

### Typical System

I. Bags:

| | |
|---|---|
| Bags in each compartment (5 rows of 25 bags each) | 150 |
| Compartments | 6 |
| Total Bags | 900 |
| Total Bag Area | 43,290 $ft^2$ |
| | |
| Total Filtration, backflow, pause, seconds | 180 |
| Filtration Phase, seconds | 150 |
| Backflow Phase, seconds | 26 |
| Pause, seconds | 4 |

It is, however, possible to operate the system wherein all 6 compartments can be on filtration phase at the same time, and then one compartment is placed on backflow with five compartments on filtration

II. Bag House and Guide Element:

(a) Each compartment of 6 total compartments (approximate dimensions)

| | |
|---|---|
| Height, ft. | 26 |
| Depth, ft. | 30 |
| Length (along bag house), ft. | 8 |

(b) Hopper, which is common to all 6 compartments (approximate dimentions)

| | |
|---|---|
| Height (cell plate to axis of auger), ft. | 21.5 |
| Depth, ft. | 30 |
| Length (along bag house), ft. | |
|     at cell plate | 48 |
|     at auger | 39.6 |
| | |
| Slope of sides of hopper, from horizontal (see FIG. 3), degrees | 67 |
| | |
| Slope of ends of hopper, from vertical (see FIG. 1), degrees (approx.) | 12 |
| | |
| Smoke inlet pipe diameter, inches | 24.5 |
| | |
| Angle between inlet pipe and ridge of guide element, degrees (approx.) | 12 |

(c)  Inverted V-Guide Element

| | |
|---|---|
| Apex or ridge to bottom of cell plate, inches, (approx,) | 57 |
| Apex angle, degrees | 25 |
| Inlet end actual length measure from ridge perpendicularly to edge, inches | 80.6 |
| Total length, inches (42 ft - 4 inches) | 507.9 |
| Vertical heights perpendicular to ridge (actual lengths are these values divided by cos 12°) at distances along ridge (see FIG. 5) | see previous table |

III. Operation

| | |
|---|---|
| Smoke side inlet pressure, inches $H_2O$, (279 mm $H_2O$) | 11 |
| Back flow inlet pressure, inches $H_2O$, (406 mm $H_2O$) | 16 |
| Total smoke, actual cubic ft/hr (30,000 meters$^3$/hr.) (SFC/hr. 1,059,435) | 1,919,200 |
| N660 Black, lbs/actual cubic ft. | 0.0036 |
| Total lbs/hr recovered (about 83 tons/day) | 6910 |
| Inlet temperature, °F, | 482 (250°C) |
| Inlet pressure, inches $H_2O$ | 11 |

The invention has several important advantages over previous operations not using the roof-shaped deflector. In particular, the following advantages should be emphasized.

The guide element knocks out carbon black particles into the hopper before they every get carried into the filter bag. Therefore, the guide element reduces the cleaning action required from the filter bags. This is achieved in spite of the fact that the smoke inlet direction is such that the smoke does essentially not directly impinge on any area of the guide element. The guide element is so to speak a weak deflector, unlike, e.g. a deflector arranged across the smoke path at 45° to the smoke inlet direction for deflecting the smoke vertically downwardly.

The invention in reducing the cleaning action of the filter bags reduces the cleaning cycles and thus increases the bag life.

The guide element or deflector has a cyclone effect by throwing out carbon black when the gas stream changes direction.

The smoke rising from the bottom of the hopper or trough flows at reduced velocity thereby assisting the fallout of carbon black particles.

Loose carbon black does not readily hang up on the roof-shaped guide element.

The inverted V distributor or guide element cannot block up and creates no back pressure.

The roof-shaped guide element creates a uniform smoke distribution throughout the whole filter system thus causing essentially each filter compartment and in fact each filter to be subjected to approximately the same filtration load.

Impingement of the particles on the under surfaces of the guide and particle-to-particle impingements agglomerates the particles into larger particles for ease of filtration and also allowing the non-heavier particles to continue the downflow direction to even by-pass the filter bags and to be directly recovered via the auger means.

Reasonable variations and modifications which will become apparent to those skilled in the art can be made from this invention without departing from the spirit and scope thereof.

RECHTSANWÄLTE
JOCHEN PAGENBERG DR. JUR., LL M HARVARD**
BERNHARD FROHWITTER DIPL -ING *
GÜNTER FRHR. v. GRAVENREUTH DIPL -ING. (FH)*

PATENTANWÄLTE – EUROPEAN PATENT ATTORNEYS
HEINZ BARDEHLE DIPL -ING
WOLFGANG A. DOST DR. DIPL -CHEM
UDO W. ALTENBURG DIPL -PHYS

POSTFACH 860620, 8000 MÜNCHEN 86
TELEFON (089) 98 03 61
TELEX 522791 pad d
CABLE: PADBÜRO MÜNCHEN
BÜRO: GALILEIPLATZ 1, 8 MÜNCHEN 8(

DATUM March 20, 1984
31 229-EP    D/wi

Claims

1. A filtration apparatus comprising

a) a plurality of compartments arranged in an essentially straight row defining a longitudinal direction,

b) arranged below said compartments a common hopper, said hopper being in fluid communiciation with each compartment via at least one filter,

c) inlet means for introducing a fluid into said common hopper at or near one end thereof in a main direction of injection,

d) elongated guide means arranged inside of said hopper which guide means are substantially roof-shaped covering from above the fluid when introduced under the inlet end of said guide means, said guide means being essentially completely open at the bottom and arranged to permit flow of said fluid around the sides of the guide means through said filters into said compartments.

2. The apparatus of claim 1 characterized in that said guide means are substantially narrower than the inside width of the hopper at the location of the guide means; in particular wherein said guide means has a ridge facing upwardly toward the row of compartments.

3. The apparatus of at least one of the preceding claims characterized in that said guide means has a convex upwardly facing surface being steeper than the angle of repose of the material to be filtered from the fluid; in particular wherein said guide means has an at least partly concave downwardly facing surface which guides the incoming fluid longitudinally, laterally and downwardly; in particular wherein the concave downwardly facing surface in cross section perpendicular to the longitudinal direction is selected from the group consisting of

an inverted V,
an arcuate shape,
a semicircle,
an inverted rectangular U.

4. The apparatus of at least one of the preceding claims characterized in that said guide means comprises two inclined elongated plane plates forming an inverted V-shaped trough; in particular wherein said guide means has a downwardly facing surface which in longitudinal direction from the fluid inlet side of the guide means toward the other end of the guide means becomes less and less enclosing for the fluid stream; in particular wherein said guide means are tapering from the inlet end of the guide means toward the other end.

5. The apparatus of at least one of the preceding claims characterized in that a straight line defined by the longitudinal component of the main direction of injection does not intersect any area of said guide means; in particular wherein said longitudinal direction is horizontal.

6.  The apparatus of at least one of the preceding claims characterized in that

said guide means comprise two elongated plate-shaped tapering elements forming an inverted V-shaped trough-like structure, in particular wherein said tapered plates have a slant height measured along the plates perpendicularly to the ridge of the trough which is larger than the slant height for plates tapering between the same values in a linear fashion.

7.  A process for filtering a fluid comprising medium and entrained material characterized in that

a)  said fluid is introduced into an elongated hopper section essentially in longitudinal direction,

b)  said fluid is guided by an elongated guide means which is arranged inside of said hopper above the location of fluid entry into the hopper and substantially in longitudinal direction said guide means being entirely open toward the bottom and having an at least partly concave surface facing the injected fluid stream, so that said fluids flows longitudinally, then laterally and downwardly, then upwardly within said hopper and upwardly past said guide means,

c)  passing fluid flowing upwardly from said hopper through filters into a plurality of compartments arranged in a row above said hopper and being in fluid communication with said hopper through said filters, and thereby separating entrained material from said medium,

d)  periodically passing a cleaning fluid in opposite direction to said fluid flow through the filter or filters of a compartment such as to remove the entrained material from the filter or filters, and

e)  dropping the so removed material by gravity passed said guide means into the lower section of said hopper.

8. The process of claim 7, characterized in that said guide means has a convex shaped upwardly facing exterior surface and with essentially all areas of this exterior surface being steeper than the angle of repose of the entrained material.

9. The process of at least one of claims 7 and 8 characterized in that said fluid is directed into said hopper below said guide means at an angle between 0° and about 25°, the angle being defined between the main direction of injection and the longitudinal direction of the guide means; in particular wherein said guide means is arranged substantially horizontally and the fluid is injected in upward direction, said angle being in the range of about 5 to 20° with the horizontal; in particular wherein said main direction and said longitudinal direction are located in one substantially vertical plane.

10. The process of at least one of claims 7 to 9 characterized in that said fluid is introduced into said hopper in a main injection direction having a longitudinal component, and wherein said guide means are shaped and arranged in such a way that a line in the direction of said longitudinal component does not intersect with any area of said guide means; in particular wherein said fluid is carbon black containing smoke, wherein said filters are elongated filter bags hung within the compartments and being open at the bottom.

FIG. I

FIG. 2

FIG. 3

FIG. 4

FIG. 5

FIG. 6